# EUROPÄISCHE PATENTSCHRIFT

(11) **EP 3 832 667 B1**
(45) Veröffentlichungstag und Bekanntmachung des Hinweises auf die Patenterteilung: **07.06.2023**
(21) Anmeldenummer: 19213538.2
(22) Anmeldetag: 04.12.2019
(51) Int. Cl.: H01B 5/06, H02G 5/10

(54) **HALBZEUGPROFIL ZUR VERWENDUNG ALS STROMLEITER**
SEMIFINISHED PROFILE FOR USE AS A CONDUCTOR
PROFILÉ DEMI-PRODUIT DESTINÉ À ÊTRE UTILISÉ EN TANT QUE CONDUCTEUR

(43) Veröffentlichungstag der Anmeldung: 09.06.2021
(73) Patentinhaber: Siemens Energy Global GmbH & Co. KG, 81739 München (DE)
(72) Erfinder: Rohmann, Mariusz, 13469 Berlin (DE); Schräder, Dirk, 13158 Berlin (DE)

(56) Entgegenhaltungen:
- DE-C- 584 982
- DE-C- 817 156
- GB-A- 1 190 925

## Beschreibung

Die Erfindung betrifft ein Halbzeugprofil in Form eines Aluminium-Strangpressprofils zur Verwendung als Stromleiter.

Aluminium-Strangpressprofile sind in vielfältigen formgebunden bekannt. Unter anderem werden Aluminiumprofile zur Verwendung als Stromleiter eingesetzt, wenn eine gewisse Entfernung zu überbrücken ist und hierbei kein Kabel eingesetzt werden kann. Bei einer Verwendung im Freien werden in der Regel Rohr-förmige Profile eingesetzt, welche einerseits eine geringere Anfälligkeit zur Ablagerung von Schmutz oder Schnee aufweisen und andererseits eine hohe Biegesteifigkeit besitzen.

Wenn es gilt besonders hohe Ströme, insbesondere bei Wechselspannung zu übertragen, sind große Oberflächen des Stromleiters von Vorteil. Insofern sind diesbezüglich Rohr-förmige Profile besonders geeignet. Von Nachteil kann es jedoch sein, dass der Durchmesser des Rohres zur Ermöglichung einer entsprechenden Stromstärke relativ groß wird. Wird hingegen die Wandstärke des Rohres erhöht, so wird der weitere Querschnitt bei Wechselspannung jedoch nur unzureichend ausgenutzt.

Eine Verbesserung der Leitfähigkeit und zugleich eine vorteilhafte Kühlbarkeit eines Stromleiters ist aus der GB 1190925 A bekannt. Hierzu wird vorgeschlagen in der Innenseite eines Hohlleiters eine Mehrzahl sich radial einwärts ersteckende Rippen einzusetzen.

Weiterhin ist aus der DE 817156 C ein Stromleiter bekannt, bei dem zwei konzentrische Aluminiumrohre eingesetzt werden. Zur Erzielung einer hohen mechanischen Belastbarkeit wird hierzu auf das innere Aluminiumrohr Stahldrähte aufgebracht, auf die wiederum das äußere Aluminiumrohr aufgepresst ist. Somit wird eine gute Leitfähigkeit bei vorteilhaften mechanischen Eigenschaften erreicht.

Die Herstellung eines vorteilhaften Leiters mit guten mechanischen Eigenschaften ist bei der Ausführung aus DE 584982 C vereinfacht, indem nur ein Aluminiumrohr eingesetzt wird, welches mit umlaufenden relativ hohen Rippen versehen wird.

Wenngleich sich die Ausführungen für längere Stromleitungen bewährt haben, so gilt es unvermindert die elektrische Leitfähigkeit für Wechselstrom zu verbessern, ohne dass die Abmessungen unnötig vergrößert werden müssen. Aufgabe der vorliegenden Erfindung ist es daher, eine Alternative zu einem Rohr-förmigen Profil zur Stromleitung bereitzustellen.

Die gestellte Aufgabe wird durch eine erfindungsgemäße Ausführungsform nach der Lehre des Anspruchs eins gelöst. Vorteilhafte Ausführungsformen sind Gegenstand der Unteransprüche.

Zur Realisierung eines vorteilhaften Stromleiters wird ein neues, erfindungsgemäßes Halbzeugprofil geschaffen. Dieses besteht aus einer Aluminiumlegierung (einschließlich reinem Aluminium). Die Herstellung erfolgt als Strangprofil, wozu ein geeignetes Verfahren aus den bekannten Verfahren zur Herstellung eines Aluminium-Strangprofils verwendet werden kann. In der Verwendung als Stromleiter wird das Halbzeugprofil eine bestimmte feststehende oder bewegliche Einbaulage aufweisen. Entsprechend der möglichen Verwendung im Freien gilt es nach Möglichkeit zu verhindern, dass sich Schnee oder Schmutz in größeren Mengen auf dem Stromleiter ablagern. Hieraus resultierend wird eine Unterscheidung zwischen einer Oberseite und einer Unterseite des Halbzeugprofils vorgenommen.

Das erfindungsgemäße Halbzeugprofil wird zunächst unterteilt in einen an der Oberseite angeordneten oberen Außenabschnitt und einen an der Unterseite angeordneten einteiligen oder zweiteiligen Abschnitt. Hierbei ist es erforderlich, dass der obere Außenabschnitt eine Formgebung aufweist, die ein Ableiten von Regenwasser und insofern von Schnee oder Staub in größeren Mengen zu den Seiten hin gewährleistet. Hierzu weist der obere Außenabschnitt in besonders vorteilhafter Weise eine bogenförmige, beispielsweise halbkreisförmige, Gestalt auf. Die Gestaltung des an der Unterseite angeordneten Abschnitts erfolgt in einer ersten Ausführungsform als einteiliger unterer Außenabschnitt. In einer zweiten Ausführungsform wird der Abschnitt in zwei zueinander beabstandete Hälften aufgeteilt und wird insofern von zwei unteren Außenabschnitten realisiert. Maßgeblich ist dabei, dass der untere Außenabschnitt bzw. die unteren Außenabschnitte beidseitig in kleiner ist als der obere Außenabschnitt und somit eine Ablagerung auf dem unteren Außenabschnitt bzw. den unteren Außenabschnitten bei einer angenommenen waagerechten Einbaulage im Wesentlichen ausgeschlossen ist. Dabei ist in bevorzugte Ausführungsform gleichfalls vorgesehen, dass der untere Außenabschnitt bzw. die zwei unteren Außenabschnitte eine bogenförmige Gestalt, besonders vorteilhaft als Abschnitt eines Kreises, aufweisen.

Erfindungsgemäß ist nunmehr vorgesehen, dass der obere Außenabschnitt auf beiden Seiten (quer zur Richtung von der Unterseite zu Oberseite) den einen unteren Außenabschnitt bzw. die unteren Außenabschnitte übergreift. Somit wird ebenso gewährleistet, dass vom oberen Außenabschnitt abgleitendes Regenwasser, Schnee oder Schmutz nicht am unteren Außenabschnitt bzw. an den unteren Außenabschnitt hängen bleiben kann. Als weiteren Vorteil ermöglicht das seitlich offene Profil eine verbesserte Wärmeableitung aus dem Inneren und somit mitunter für höhere Nennströme einsetzbar werden. Die neuartige Formgebung verringert weiterhin die Anfälligkeit für winderregte Vibrationen.

Zur maßgeblichen Verbesserung gegenüber dem bekannten Stand der Technik in Form von Rohren weist das Halbzeugprofil als Stromleiter weiterhin einen beabstandet zum oberen Außenabschnitt angeordneten oberen Innenabschnitt auf. Hierbei verläuft der obere Innenabschnitt im Wesentlichen entlang des oberen Außenabschnitts, wobei ein paralleler Verlauf des oberen Außenabschnitt und des oberen Innenabschnitts nicht zwingend ist. Weiterhin weist das Halbzeugprofil einen unteren Innenabschnitt auf, welcher beabstandet zum unteren Außenabschnitt bzw. den unteren Außenabschnitten angeordnet ist.

Hierbei kann in einer ersten Variante analog vorgesehen sein, dass der obere Innenabschnitt mit dem unteren Innenabschnitt eine geschlossene Form bildet. Ebenso kann in einer zweiten Variante vorgesehen sein, dass der obere Innenabschnitt den unteren in den Abschnitt übergreift und insofern eine größere Breite (quer zur Richtung von der Unterseite zu Oberseite) als der untere in den Abschnitt aufweist.

Durch die neu geschaffene Formgebung des Halbzeugprofils wird ein besonders vorteilhafter Stromleiter geschaffen. Insofern können höhere Ströme übertragen werden als dies mit einem Rohr mit gleichem Außendurchmesser möglich ist.

Grundsätzlich ist vorgesehen, dass der obere Außenabschnitt zwei freie Enden aufweist. Hierbei kann der untere Außenabschnitt bzw. die zwei unteren Außenabschnitte in zweierlei Weise in Relation zum oberen Außenabschnitt gestaltet sein. Bei der ersten Ausführungsform weist der untere Außenabschnitt vorteilhaft zwei freie Enden auf, welche beabstandet zum oberen Außenabschnitt sind. Bei der zweiten Ausführungsform mit den beiden zueinander beabstandeten unteren Außenabschnitten sind vorteilhaft die beiden außen liegenden Enden der beiden unteren Außenabschnitte beabstandet zum oberen Au-ßenabschnitt angeordnet.

Demgegenüber ist eine weitere Gestaltung besonders vorteilhaft, bei der die beiden einander gegenüberliegenden Enden des unteren Außenabschnitt bzw. der beiden unteren Außenabschnitte mit dem oberen Außenabschnitt verbunden sind, wobei der obere Außenabschnitt beidseitig über die Verbindungen mit dem unteren Außenabschnitt bzw. den unteren Außenabschnitten hinausgeführt ist und entsprechend die freien Enden des oberen Außenabschnitt vorhanden sind. Vorteil hierbei ist die unmittelbare Verbindung des unteren Außenabschnitt bzw. der unteren Außenabschnitte mit dem oberen Außenabschnitt und der somit zu erzielenden Steifigkeit der Verbindung, wobei durch die freien Enden des oberen Außenabschnitt die vorteilhafte Ableitung von Wasser, Schnee und Schmutz gewährleistet wird.

Hinsichtlich der Innenabschnitte mit einer ersten vorteilhaften sowie einfachen Variante der obere Innenabschnitt zusammen mit dem unteren Innenabschnitt von einem Kreisprofil gebildet.

In einer zweiten vorteilhaften Variante werden hingegen die beiden Enden des oberen Innenabschnitts bis an den unteren Außenabschnitt bzw. die beiden unteren Außenabschnitte herangeführt. Somit wird bereits die unmittelbare Verbindung des oberen Innenabschnitts mit dem unteren Außenabschnitt geschaffen. Dazu werden weiterhin die beiden gegenüberliegenden Enden des unteren inneren Abschnitts bis an den oberen in den Abschnitt herangeführt. Somit erfolgt eine weitere Verbindung zwischen dem oberen Innenabschnitt und dem unteren inneren Abschnitt, wodurch eine hohe Stabilität erzielt wird.

Unabhängig von der konkreten Verbindung der Abschnitte zueinander ist es weiterhin vorteilhaft, wenn der obere Außenabschnitt mit dem oberen Innenabschnitt über zumindest einen Verbindungssteg verbunden ist. Sofern genau ein Verbindungsteg vorhanden ist, so ist dieser vorteilhaft mittig zu den Abschnitten anzuordnen. In gleicher Weise gilt es vorteilhaft den unteren Außenabschnitt mit dem unteren Innenabschnitt mittels zumindest eines Verbindung Steges miteinander zu verbinden.

Insbesondere in der Gestaltung, bei der die Abschnitte nicht unmittelbar miteinander verbunden sind, ist es weiterhin besonders vorteilhaft, wenn der obere Außenabschnitt mit dem oberen Innenabschnitt über zumindest zwei, insbesondere drei, Verbindungsstege verbunden ist. Analog gilt in vorteilhafter Weise die Verwendung von zwei, insbesondere drei, Verbindungsstege zwischen dem unteren Außenabschnitt bzw. den unteren Außenabschnitten und dem unteren Innenabschnitt.

Wesentlich für die Erfindung ist die ungefähr parallele Anordnung von Außenabschnitt und Innenabschnitt bei Gewährleistung eine Ableitung von Wasser, Schnee und Schmutz. Entsprechend diesem Aufbau mit der Betrachtung von Oberseite und Unterseite ist es dabei vorteilhaft, eine spiegelsymmetrische Ausführung bezüglich einer Hochebene zu wählen.

Für die Aufgabe eine für den Außeneinsatz geeignete Stromschiene bereitzustellen, wird ein weiteres erfindungsgemäßes Halbzeugprofil zur Verfügung gestellt. Gleichfalls ist vorgesehen, dass dieses als Strangprofil aus einer Aluminiumlegierung hergestellt ist. Entsprechend der bestimmungsgemäßen Verwendung weist dieses ebenso analog eine Oberseite und eine Unterseite auf.

Das Halbzeugprofil setzt sich wiederum aus verschiedenen Abschnitten zusammen, wobei an der Oberseite ein oberer bogenförmige Außenabschnitt und an der Unterseite ein unterer bogenförmige Außenabschnitt angeordnet sind. Der obere Außenabschnitt wird hierbei über ein U-Profilabschnitt mit dem unteren Außenabschnitt verbunden. Dabei erstreckt sich der mittlere Abschnitt des U-Profilabschnitts in einer Richtung von der Unterseite zur Oberseite und somit entsprechend die beiden Flanken des U-Profilabschnitts in eine Richtung quer zu einer Verbindungslinie von der Unterseite zu Oberseite. Maßgebliches ist wiederum, dass der obere Außenabschnitt bei einer Betrachtung von der Oberseite sowohl den U-Profilabschnitt als auch den unteren Außenabschnitt überdeckt.

In besonders vorteilhafter Verwendung werden zwei parallele, im Profil identische Halbzeugprofile eingesetzt, welche gegenüberliegend, d.h. gespiegelt angeordnet werden. Die zweigeteilte Ausfuerhung bringt gegenüber der einteiligen Ausführung neben einer erhöhten Stromtagfähigkeit insbesondere eine verbesserte Wärmeabfuhr. Daneben kann mitunter die mechanische Anbindung für Kontaktsysteme und sich bewegende Verbindungstellen einfacher bzw. zuverlässiger und stabiler gestaltet werden. Insofern kann je nach Trennschalter-typ und/oder Trennschalter-Portfolio die einteilige oder die zweiteilige Ausführung vorteilhaft sein.

Die Verbindung des oberen Außenabschnitts mit dem Ober-Profilabschnitt erfolgt vorzugsweise ungefähr in der Mitte des oberen Außenabschnitts. Dies wird als gegeben angesehen, wenn die Entfernung der Verbindung von der Mitte des oberen Außenabschnitts höchstens der 0,25-fachen Bogenlänge des oberen Außenabschnitts entspricht.

Weiterhin ist es vorteilhaft, wenn sich der obere Außenabschnitt ausgehend von der Verbindung mit dem U-Profilabschnitt mit einem Teil kontinuierlich von der Unterseite entfernt. Insofern weist das freie Ende des oberen Au-ßenabschnitts am zur Oberseite weisend den größten Abstand zur Unterseite auf. Demgegenüber verläuft der andere Teil des oberen Außenabschnitts ausgehend von der Verbindung kontinuierlich auf die Unterseite zulaufend. Somit weist das andere freie Ende des oberen Außenabschnitts den geringsten Abstand im Verlauf des oberen Außenabschnitts zur Unterseite auf.

Die Verbindung des unteren Außenabschnitts mit dem U-Profilabschnitt erfolgt vorzugsweise mit dem zur Oberseite weisenden Ende des unteren Außenabschnitts. Demgegenüber verläuft vorzugsweise der untere Außenabschnitt zum freien Ende hin kontinuierlich in Richtung Unterseite.

Das Halbzeugprofil kann durch den Einsatz von Rippen, welcher im U-Profilabschnitt angeordnet werden, verbessert werden. Entsprechend kann eine Rippe oder es können mehrere Rippen auf der Innenseite des U-Profilabschnitts vorgesehen sein.

Der von der Unterseite zur Oberseite ausgerichtete mittlere Abschnitt des U-Profilabschnitts ermöglicht eine vorteilhafte Befestigung des Halbzeitprofils. Weiterhin wird es ermöglicht, dass so geschaffene Halbzeugprofil zugleich zweimal einzusetzen und hierbei gegenüberliegend anzuordnen. Dabei kann mittels Abstandshaltern zwischen den gegenüberliegenden mittleren Abschnitten der U-Profilabschnitte eine relative Position der Halbzeitprofile zueinander sichergestellt werden.

In den nachfolgenden Figuren werden beispielhafte Ausführungsformen erfindungsgemäßer Halbzeugprofile skizziert. Es zeigen:
- Fig. 1: ein erstes Ausführungsbeispiel für ein Halbzeugprofil mit einer kreisförmigen Gestalt;
- Fig. 2: ein zweites Ausführungsbeispiel für ein Halbzeugprofil, wobei die Außenabschnitte von überlappenden Halbkreisen gebildet werden;
- Fig. 3: ein Ausführungsbeispiel analog Fig. 2, wobei die Enden eines jeweiligen Abschnitts mit dem angrenzenden Abschnitt verbunden sind;
- Fig. 4: ein weiteres Ausführungsbeispiel analog Fig. 2, wobei der untere Außenabschnitt zweigeteilt ausgeführt ist.

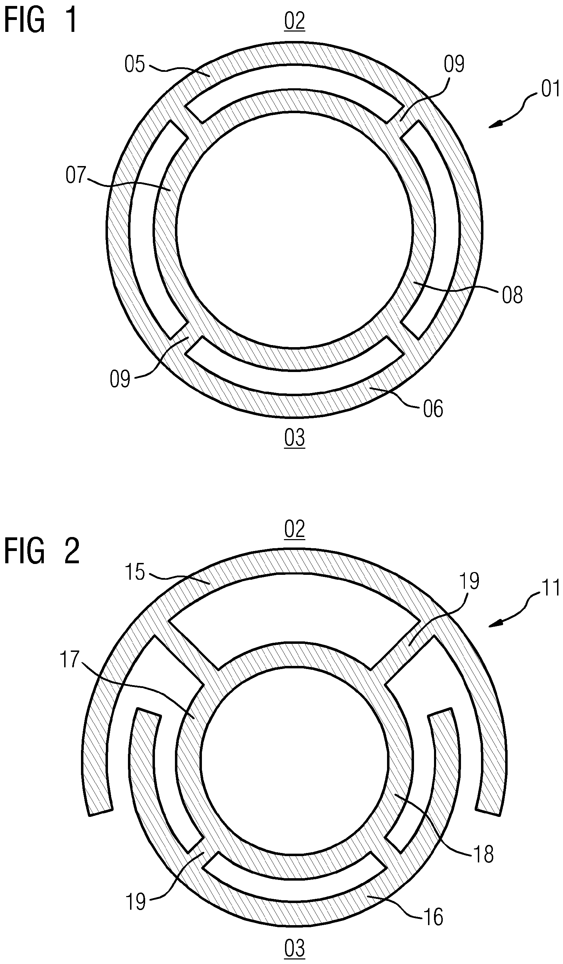

In der Fig. 1 wird ein erstes Ausführungsbeispiel für ein Halbzeugprofil 01 mit einer vorteilhaft einfachen sowie biegesteifen Gestalt skizziert. Das Halbzeugprofil 01 ist analog der bekannten Ausführungen mit doppelwandigem Aluminiumprofil ausgeführt und eignet sich insbesondere für eine Verwendung im Freien bei einer waagerechten Ausrichtung. Entsprechend weist das Halbzeugprofil 01 eine Oberseite 02 sowie gegenüberliegend eine Unterseite 03 auf. In diesem Ausführungsbeispiel wird ein oberer Außenabschnitt 05 zusammen mit einem unteren Außenabschnitt 06 von einem Rohr gebildet und weist insofern eine Kreisform auf. Analog wird ein oberer Innenabschnitt 07 zusammen mit einem unteren Innenabschnitt 08 gleichfalls von einem Rohr in Kreisform gebildet. Zur Gewährleistung der relativen Position der Innenabschnitte relativ zu den Außenabschnitten und zur Erhöhung der Steifigkeit sind die Abschnitte über Verbindungsstege 09 miteinander verbunden.

In der Fig. 2 wird ein erstes Ausführungsbeispiel für ein erfindungsgemäßes Halbzeugprofil 11 skizziert. In diesem Fall wird der obere Außenabschnitt 15 von einem Abschnitt eines Rohres gebildet und erstreckt sich von der Oberseite 02 bis über die Mitte in Richtung der Unterseite 03. Dabei weist der obere Außenabschnitt 15 zwei freie Enden auf. Der untere Au-ßenabschnitt 16 wird gleichfalls von einem Rohrabschnitt gebildet, welcher 16 sich von der Unterseite 03 aus in Richtung der Oberseite 02 bis über die Mitte erstreckt. Gleichfalls weist der untere Außenabschnitt 16 zwei freie Enden auf. Zu erkennen ist, dass der obere Außenabschnitt 15 mit seinen beiden freien Enden den unteren Außenabschnitt 16 überlappt. Somit wird gewährleistet, dass in der Verwendung im Freien Regen, Schnee oder Schmutz nicht am unteren Außenabschnitt 16 hängen bleiben kann. Demgegenüber werden die oberen und unteren Innenabschnitte 17, 18 analog Fig. 1 von einem Rohr im Kreisprofil gebildet. Gleichfalls sind wiederum die Außenabschnitte 15, 16 mit den Innenabschnitten 17, 18 über Verbindungsstege 19 verbunden. Die überlappenden Außenabschnitte 15, 16 mit dem Freiraum dazwischen verbessert die Wärmeabfuhr von den Innenabschnitten 17, 18.

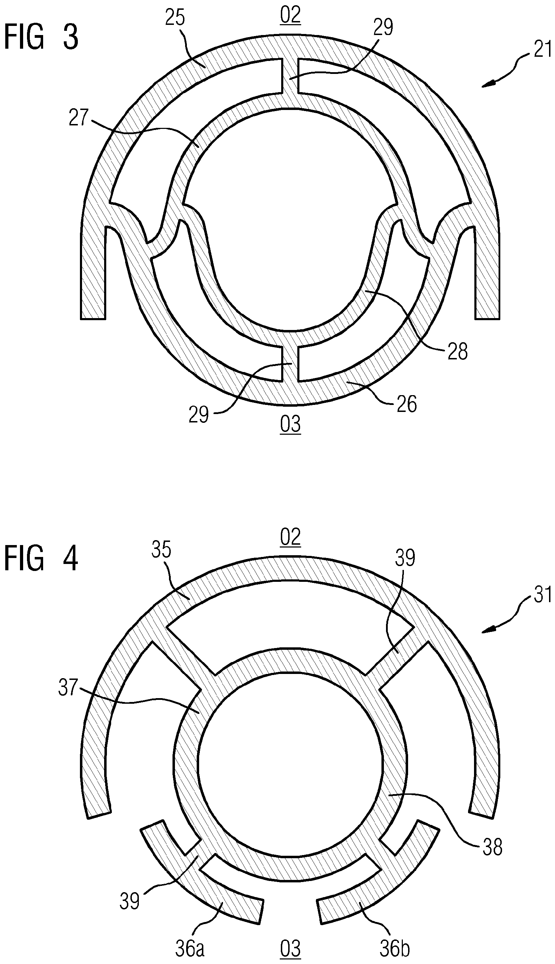

In der Fig. 3 wird ein weiteres Ausführungsbeispiel für ein erfindungsgemäßes Halbzeugprofil 21 skizziert. Der obere Au-ßenabschnitt 25 weist hierbei eine U-förmige, sich zu Unterseite 03 öffnende Gestalt mit zwei freien, gegenüberliegenden Enden auf. Der untere Außenabschnitt 26 wird analog vorheriger Ausführung als Rohrabschnitt gestaltet, jedoch wird in diesem Ausführungsbeispiel der untere Außenabschnitt 26 mit den beiden gegenüberliegenden Enden mit dem oberen Außenabschnitt 25 verbunden. In vergleichbarer Weise wird der obere Innenabschnitt 27 mit einer bogenförmigen, sich zu Unterseite 03 öffnen Gestalt ausgeführt, wobei die gegenüberliegenden Enden des oberen Innenabschnitts 27 mit dem unteren Außenabschnitt 26 verbunden sind. Der untere Innenabschnitt 28 weist analog eine bogenförmige, sich zur Oberseite 02 öffnende Gestalt auf, wobei die beiden gegenüberliegenden Enden mit dem oberen Innenabschnitt 27 verbunden sind. Die bereits vorhandenen Verbindungen zwischen den Abschnitten 25-28 legen bereits die Lage der Abschnitte 25-28 zueinander fest. Zur Gewährleistung der Stabilität ist weiterhin jeweils ein Verbindungssteg 29 zwischen dem oberen Außenabschnitt 25 und dem oberen Innenabschnitt 27 sowie zwischen dem unteren Außenabschnitt 26 und dem unteren Innenabschnitt 28 vorgesehen.

Ein weiteres Ausführungsbeispiel eines erfindungsgemäßen Halbzeugprofils 31 analog der Fig. 2 skizziert die Fig. 4. Dieses 31 weist gleichfalls einen oberen Außenabschnitt 35, einen oberen Innenabschnitt 37 und ein unteren Innenabschnitt 38 auf. Im Gegensatz zur Ausführung in Fig. 2 ist in diesem Ausführungsbeispiel jedoch vorgesehen, dass zwei untere Au-ßenabschnitte 36a und 36b vorhanden sind, welche 36a, 36b beabstandet zueinander ausgeführt sind.

Wenngleich in den Ausführungsbeispielen eine Gestalt ausgehend von einem Kreisprofil gewählt wird, so sind hiervon abweichende Gestaltungsformen, beispielsweise in Trapezform oder in V-Form möglich. Wesentlich ist insbesondere die quasi doppelwandige Ausführung mit dem freien Abstand zwischen den Außenabschnitten und den Innenabschnitten sowie weiterhin, dass eine Ablagerung oder Ansammlung von Wasser, Schnee oder Schmutz so weit wie möglich verhindert ist.

## Patentansprüche

1. Halbzeugprofil (01,11,21,31) zur Verwendung als Stromleiter hergestellt aus einer Aluminiumlegierung als Strangprofil mit einer Oberseite (02) und einer Unterseite (03) umfassend
- einen an der Oberseite (02) angeordneten oberen bogenförmigen Außenabschnitt (05,15,25,35) und
- einen an der Unterseite (03) angeordneten unteren, insbesondere bogenförmigen, Außenabschnitt (06,16,26) oder zwei an der Unterseite angeordnete untere, insbesondere bogenförmigen, Außenabschnitte (36a,36b) und
- einen beabstandet zum oberen Außenabschnitt (05,15,25,35) angeordneten oberen Innenabschnitt (07,17,27,37) und
- einen beabstandet zum unteren Außenabschnitt (06,16,26) respektive zu den unteren Außenabschnitten (36a,36b) angeordneten unteren Innenabschnitt;
wobei der obere Außenabschnitt (15,25,35) zwei frei Enden aufweist und den unteren Außenabschnitt (16,26) respektive die unteren Außenabschnitte (36a,36b) übergreift; und wobei der obere Innenabschnitt (07,17,37) mit dem unteren Innenabschnitt (08,18,38) eine geschlossene Form bildet oder
wobei der obere Innenabschnitt (27) den unteren Innenabschnitts (28) übergreift.

2. Halbzeugprofil (01,11,21,31) nach Anspruch 1,
**dadurch gekennzeichnet,**
**dass** eine untere Außenabschnitt (16) zwei frei Enden aufweist.

3. Halbzeugprofil (01,11,21,31) nach Anspruch 1,
**dadurch gekennzeichnet,**
**dass** die zwei unteren Außenabschnitte (36a,36b) beabstandet zueinander und beabstandet zum oberen Außenabschnitt (35) angeordnet sind.

4. Halbzeugprofil (01,11,21,31) nach Anspruch 1,
**dadurch gekennzeichnet,**
**dass** die gegenüberliegenden Enden der unteren Außenabschnitte am oberen Außenabschnitt enden.

5. Halbzeugprofil (01,11,21,31) nach Anspruch 1,
**dadurch gekennzeichnet,**
**dass** wobei die Enden des unteren Außenabschnitts (26) am oberen Außenabschnitt enden.

6. Halbzeugprofil (01,11,21,31) nach einem der Ansprüche 1 bis 5,
**dadurch gekennzeichnet,**
**dass** der obere Innenabschnitt (07,17,37) und der untere Innenabschnitt (08,18,38) von einem Kreisprofil gebildet werden.

7. Halbzeugprofil (01,11,21,31) nach einem der Ansprüche 1 bis 5,
**dadurch gekennzeichnet,**
**dass** die Enden des oberen Innenabschnitts (27) am unteren Außenabschnitt (26) respektive den unteren Außenabschnitten und die Enden des unteren Innenabschnitts (28) am oberen Innenabschnitt (27) enden.

8. Halbzeugprofil (01,11,21,31) nach einem der Ansprüche 1 bis 7,
**dadurch gekennzeichnet,**
**dass** der obere Außenabschnitt (05,15,25,35) mit dem oberen Innenabschnitt (07,17,27,37) über zumindest einen Verbindungssteg (09,19,29,39) und/oder der untere Außenabschnitt (06,16,26) mit dem unteren Innenabschnitt (08,18,28) über zumindest einen Verbindungssteg (09,19,29) verbunden ist.

9. Halbzeugprofil (01,11,21,31) nach Anspruch 8,
**dadurch gekennzeichnet,**
**dass** der obere Außenabschnitt (05,15,35) mit dem oberen Innenabschnitt (07,17,37) über zumindest zwei Verbindungsstege (09,19,39) und/oder der untere Außenabschnitt (06,16) respektive die unteren Außenabschnitte (36a,36b) mit dem unteren Innenabschnitt (08,18,28,38) über zumindest zwei Verbindungsstege (09,19,39) verbunden ist.

10. Halbzeugprofil (01,11,21,31) nach einem der Ansprüche 1 bis 9,
**gekennzeichnet durch**
eine zu einer Hochebene spiegelsymmetrische Ausführung.

## Claims

1. Semifinished profile (01, 11, 21, 31) for use as a current conductor produced from an aluminium alloy as an extruded profile with an upper side (02) and an underside (03) comprising
- an upper arcuate outer portion (05, 15, 25, 35), arranged on the upper side (02), and
- a lower, in particular arcuate outer portion (06, 16, 26), arranged on the underside (03), or two lower, in particular arcuate outer portions (36a, 36b), arranged on the underside, and
- an upper inner portion (07, 17, 27, 37), arranged at a distance from the upper outer portion (05, 15, 25, 35), and
- a lower inner portion, arranged at a distance from the lower outer portion (06, 16, 26) or respectively from the lower outer portions (36a, 36b);
the upper outer portion (15, 25, 35) having two free ends and reaching over the lower outer portion (16, 26) or respectively the lower outer portions (36a, 36b); and
the upper inner portion (07, 17, 37) forming a closed form with the lower inner portion (08, 18, 38) or
the upper inner portion (27) reaching over the lower inner portion (28).

2. Semifinished profile (01, 11, 21, 31) according to Claim 1,
**characterized**
**in that** a lower outer portion (16) has two free ends.

3. Semifinished profile (01, 11, 21, 31) according to Claim 1,
**characterized**
**in that** the two lower outer portions (36a, 36b) are arranged at a distance from one another and at a distance from the upper outer portion (35).

4. Semifinished profile (01, 11, 21, 31) according to Claim 1,
**characterized**
**in that** the opposite ends of the lower outer portions end at the upper outer portion.

5. Semifinished profile (01, 11, 21, 31) according to Claim 1,
**characterized**
**in that** the ends of the lower outer portion (26) end at the upper outer portion.

6. Semifinished profile (01, 11, 21, 31) according to one of Claims 1 to 5,
**characterized**
**in that** the upper inner portion (07, 17, 37) and the lower inner portion (08, 18, 38) are formed by a circular profile.

7. Semifinished profile (01, 11, 21, 31) according to one of Claims 1 to 5,
**characterized**
**in that** the ends of the upper inner portion (27) end at the lower outer portion (26) or respectively the lower outer portions and the ends of the lower inner portion (28) end at the upper inner portion (27).

8. Semifinished profile (01, 11, 21, 31) according to one of Claims 1 to 7,
**characterized**
**in that** the upper outer portion (05, 15, 25, 35) is connected to the upper inner portion (07, 17, 27, 37) by way of at least one connecting web (09, 19, 29, 39) and/or the lower outer portion (06, 16, 26) is connected to the lower inner portion (08, 18, 28) by way of at least one connecting web (09, 19, 29).

9. Semifinished profile (01, 11, 21, 31) according to Claim 8,
**characterized**
**in that** the upper outer portion (05, 15, 35) is connected to the upper inner portion (07, 17, 37) by way of at least two connecting webs (09, 19, 39) and/or the lower outer portion (06, 16) or respectively the lower outer portions (36a, 36b) is/are connected to the lower inner portion (08, 18, 28, 38) by way of at least two connecting webs (09, 19, 39).

10. Semifinished profile (01, 11, 21, 31) according to one of Claims 1 to 9,
**characterized by**
a configuration that is mirror-symmetrical in relation to a vertical plane.

## Revendications

1. Profilé (01, 11, 21, 31) demi-produit à utiliser comme conducteur de courant fabriqué en un alliage d'aluminium, sous la forme d'un profilé filé ayant un côté (02) supérieur et un côté (03) inférieur, comprenant
- un tronçon (05, 15, 25, 35) supérieur arqué disposé du côté (02) supérieur, et
- un tronçon (06, 16, 26) inférieur, notamment arqué, disposé du côté (03) inférieur ou deux tronçons (36a, 36b) inférieurs extérieurs, notamment arqués, disposés du côté inférieur, et
- un tronçon (07, 17, 27, 37) supérieur intérieur, disposé à distance du tronçon (05, 15, 25, 35) supérieur extérieur, et
- un tronçon inférieur intérieur, disposé à distance du tronçon (06, 16, 26) inférieur extérieur respectivement des tronçons (36a, 36b) inférieurs extérieurs ;
dans lequel le tronçon (15, 25, 35) supérieur extérieur a deux extrémités libres et chevauche le tronçon (16, 26) inférieur extérieur respectivement les tronçons (36a, 36b) inférieurs extérieurs ; et dans lequel le tronçon (07, 17, 37) supérieur intérieur forme, avec le tronçon (08, 18, 38) inférieur intérieur, une forme fermée, ou
dans lequel le tronçon (27) supérieur intérieur chevauche le tronçon (28) inférieur intérieur.

2. Profilé (01, 11, 21, 31) demi-produit suivant la revendication 1,
**caractérisé**
**en ce qu'**un tronçon (16) inférieur extérieur a deux extrémités libres.

3. Profilé (01, 11, 21, 31) demi-produit suivant la revendication 1,
**caractérisé**
**en ce que** les tronçons (36a, 36b) inférieurs extérieurs sont disposés à distance l'un de l'autre et à distance du tronçon (35) supérieur extérieur.

4. Profilé (01, 11, 21, 31) demi-produit suivant la revendication 1,
**caractérisé**
**en ce que** les extrémités opposées des tronçons inférieurs extérieurs se terminent au tronçon supérieur extérieur.

5. Profilé (01, 11, 21, 31) demi-produit suivant la revendication 1,
**caractérisé**
**en ce que** les extrémités du tronçon (26) inférieur extérieur se terminent au tronçon supérieur extérieur.

6. Profilé (01, 11, 21, 31) demi-produit suivant l'une des revendications 1 à 5,
**caractérisé**
**en ce que** le tronçon (07, 17, 37) supérieur intérieur et le tronçon (08, 18, 38) inférieur intérieur sont formés par un profilé circulaire.

7. Profilé (01, 11, 21, 31) demi-produit suivant l'une des revendications 1 à 5,
**caractérisé**
**en ce que** les extrémités du tronçon (27) supérieur intérieur se terminent au tronçon (26) inférieur extérieur respectivement aux tronçons inférieurs extérieurs et les extrémités du tronçon (28) inférieur intérieur au tronçon (27) supérieur intérieur.

8. Profilé (01, 11, 21, 31) demi-produit suivant l'une des revendications 1 à 7,
**caractérisé**
**en ce que** le tronçon (05, 15, 25, 35) supérieur extérieur est relié au tronçon (07, 17, 27, 37) supérieur intérieur par au moins une entretoise (09, 19, 29, 39) de liaison, et/ou le tronçon (06, 16, 26) inférieur extérieur est relié au tronçon (08, 18, 28) inférieur intérieur par au moins une entretoise (09, 19, 29) de liaison.

9. Profilé (01, 11, 21, 31) demi-produit suivant la revendication 8,
**caractérisé**
**en ce que** le tronçon (05, 15, 35) supérieur extérieur est relié au tronçon (07, 17, 37) supérieur intérieur par au moins deux entretoises (09, 19, 39) de liaison, et/ou le tronçon (06, 16) inférieur extérieur respectivement les tronçons (36a, 36b) inférieurs extérieurs est relié au tronçon (08, 18, 28, 38) inférieur intérieur par au moins deux entretoises (09, 19, 39) de liaison.

10. Profilé (01, 11, 21, 31) demi-produit suivant l'une des revendications 1 à 9,
**caractérisé**
**par** une réalisation symétrique comme en un miroir par rapport à un plan vertical.
